**Europäisches Patentamt**

**European Patent Office**

**Office européen des brevets**

(19)

(11) Veröffentlichungsnummer : **0 297 431 B1**

(12)

# EUROPÄISCHE PATENTSCHRIFT

(45) Veröffentlichungstag der Patentschrift :
29.05.91 Patentblatt 91/22

(51) Int. Cl.⁵ : **F03D 11/04, F03D 11/02**

(21) Anmeldenummer : **88110002.8**

(22) Anmeldetag : **23.06.88**

(54) **Windkraftanlage.**

(30) Priorität : **29.06.87 DE 3721383**

(43) Veröffentlichungstag der Anmeldung :
**04.01.89 Patentblatt 89/01**

(45) Bekanntmachung des Hinweises auf die
Patenterteilung :
**29.05.91 Patentblatt 91/22**

(84) Benannte Vertragsstaaten :
**BE DE ES FR GB IT NL**

(56) Entgegenhaltungen :
**DE-C- 459 035**
**DE-C- 835 580**
**FR-A- 988 861**
**GB-A- 196 190**
**US-A- 3 942 026**

(73) Patentinhaber : **Geier, Hans**
**Hauptstrasse 25**
**W-6455 Erlensee (DE)**
Patentinhaber : **Müller geb. Geier, Annemarie**
**Hauptstrasse 25**
**W-6455 Erlensee (DE)**
Patentinhaber : **Müller, Hans**
**Hauptstrasse 25**
**W-6455 Erlensee (DE)**

(72) Erfinder : **Geier, Hans**
**Hauptstrasse 25**
**W-6455 Erlensee (DE)**

(74) Vertreter : **Munderich, Paul, Dipl.-Ing.**
**Frankfurter Strasse 84**
**W-6466 Gründau-Rothenbergen (DE)**

**Beschreibung**

Die Erfindung betrifft eine Windkraftanlage, bestehend aus jeweils zumindest einer, in der Regel aus mehreren Längenabschnitten oder weiteren Abschnitten bestehende Tragsäule, die um 360° durchlaufend drehbar ist, wobei zumindest deren Antriebsplateau und deren Generatorenstand zwischen einzelnen beschnitten der Tragsäule mit diesen tragend und drehfest verbunden sind.

Der genannten Konzeption kommt die Entgegenhaltung gemäß GB-A-196 190 am nächsten, weil bereits dort,die horizontale Verankerung, d.h. die Fixierung gegen das Umkippen weitgehend außerhalb der ganzen Windkraftanlage erfolgt.

Des weiteren werden durch den Status-Bericht "Windenergie", erschienen im VDI-Verlag 1980, u.a. auch sogenannte Groß-Windenergie-Anlagen beschrieben, wobei einleitend die GROWIAN-I-Entwicklung, Seite 1 bis 27, in breitem Umfang erörtert wird und, Seite 77 bis 96, eine Programmübersicht für GROWIAN II durch die Herren Meggle und Schöbe gegeben wird. Das Kriterium dieser Anlagen ist die Unterbringung aller wesentlichen Teilelemente im eigentlichen Turmkopf (vgl. Seite 12), der drehbar an dem feststehenden Turmmast angeordnet ist, wobei dieser durch drei Seile abgespannt ist.

Berücksichtigt man den Rotordurchmesser von 100,4 m und die Rotorkreisfläche von 7900 m2, einschließlich der Verstellantriebe für die Rotoblätter, dem Generator, der Bremse und dem Übersetzungsgetriebe, so muß von einer erheblichen Kopflastigkeit, die sich insbesondere bei hohen Windstärken auf äußerst beanspruchende Weise bemerkbar macht, gesprochen werden, so daß die Ausfallquoten relativ hoch sind.

Die Ergebnisse berücksichtigend, führten diese dann zur Konzeption von GROWIAN II, dessen Hauptmerkmale ein Einblattrohr in freischlagender und schwenksteifer Ausführung, ein überkritisches Turmkonzept bei einer Biegefrequenz mit ca. 0,78 der Nominal-Drehfrequenz und eine weiche Wirkungsleistungsregelung sind.

Ob und wann über diese und weitere adäquate Entwicklungen das letzte Wort gesprochen wird, ist momentan nicht ersichtlich.

Weitere Entwicklungen, so z.B. die Windenergie-Anlagen Stötten 40707 sehen zwei Rotorblätter vor, die im Faserverbund entwickelt und gefertigt wurden, wobei Blattgeometrie und Blattsteifigkeit vorgegebene Auslegeparameter sind.

Zusammenfassend ist zu diesem Ausschnitt des Entwicklungsstandes zu bemerken, daß wesentliche Fortschritte in der Windenergienutzung aufzuweisen sind. Trotzdem erhebt sich die Frage, ob und inwieweit technische Bauwerke swischen 100 und 150 m Höhe vielzahlig in Großstadtnähe erstellt, das Ortsbild in nicht tragbarer Weise – bei gleichzeitiger Berücksichtigung der nur einen Bruchteil der heutigen Anforderungen deckenden Energieleistung- rechtfertigt.

Aus diesem Grund sieht der Erfinder versetzbare Windkraftanlagen vor, die eine Höhe von ca. 50 m nicht überschreiten sollen und die mit weiteren Anlagen dieser Art verbindbar sind, wobei die Verankerung dieser Energietürme den Einschluß des Windrades selbst in die kegelartig nach oben sich erweiternde Verspannung vorsehen sollte.

Dies berücksichtigend ist es weiter Aufgabe der Erfindung, eine versetzbare Windkraftanlage zu nennen, bei der die ausgewiesenen Nachteile vermieden werden, wobei es im einzelnen noch vorgesehen ist, daß die Einhaltung eines vorbestimmten maximalen Wirkungsgrades nicht durch Verstellung jedes Rotorblattes durch komplizierte Getriebe, sondern strömungsabhängig erfolgen sollte, und daß die Verspannung jeder Tragsäule einen Sicherheitskäfig bildet, der das Windrad mit einschließt, daß anstelle der Hochturmbauweise die Leistung mehrerer miteinander durch die Verspannung verbindbarer kleinerer Anlagen einheitliche Dimensionierung ermöglicht und die hohe Kopflastigkeit der Anlage vermeidet.

Nach der erfindungsgemäßen Lösung dieser Aufgabe ist die Tragsäule nach oben durch einen Tragzapfen und nach unten durch einen weiteren Tragzapfen abgegrenzt, wobei der obere Tragzapfen in einem Spannscheibenlager, das fest mit der Spannscheibe verbunden und der untere Tragzapfen in einem Drucklager, das in einem Zentralfundament gehalten ist, endet, wobei, ausgehend von dem Zentralfundament, einem Druckfundament, einem Zugfundament, der oberen Spannscheibe in Verbindung mit mindestens zwei weiteren gleichen Bodengruppierungen Spannebenen gleicher Teilung gebildet sind, zwischen denen die Tragsäule eingespannt ist, wobei die Druckstreben nach unten jeweils in einem Schwenklager und nach oben in einem Spannwinkel enden, und die Spannwinkel je eine innere, d.h. zur Spannscheibe gerichtete Spannöse und eine äußere Spannöse aufweisen, in denen, ausgehend von der Spannscheibe, die Seile mit den inneren Spannösen und ausgehend von der äußeren Spannöse, ein jeweils mit einem Spannschloß ausgerüstetes Spannseil in das Zuglager führt, und die Seile die Spannscheibe waagrecht und die Tragsäule senkrecht ausrichtbar fixieren, wobei das Windrad von einem Ruder in seiner Lage zur Windrichtung einstellbar ist und ein Kugelradgetriebe antriebt, wobei die von diesem abgehende Antriebswelle zum Generatorengetriebe durch Zwischenlager gelagert ist, die in einer offenen Seite des Trägerprofils der Tragsäule außerhalb deren Schwerlinie geführt sind, und wobei die Antriebswelle vor dem Eintritt in das Generatorengetriebe durch ein Halslager zusätzlich geführt ist, und wobei das Generatorengetriebe mit waagrecht abgehenden Zapfwellen für verschieden dimensionierbare, auskuppelbare Generatoren ausgerüstet sind.

Die Eingliederung der Funktionsbereiche, und zwar des Antriebsplateaus und des Generatorenstandes in die Tragsäule bei fester Verbindung mit deren einzelnen Längenabschnitten, ermöglicht eine feste Einspannung der beidendig mit Tragzapfen verbundenen Tragsäulen zwischen dem durch das Zentralfundament gehaltenen Drucklager und dem durch die Spannscheibe gehaltenen Zuglager, wobei, ausgehend vom Zentralfundament, in Reihe, eine statisch einheitliche Säule gebildet wird, und, ausgehend vom Zentralfundament, einem Druckfundament und einem Zugfundament sowie der ebenfalls zentral vorgesehenen Spannscheibe eine Spannebene gebildet wird, die in Verbindung mit weiteren Spannebenen in gleicher Teilung die Tragsäule eindeutig fixieren. Hierbei werden zumindest drei um 120° versetzte Spannebenen benötigt.

Die begrenzende Anordnung der Spannscheibe in Verbindung mit den Druckstreben und den beiden Spannseilen bildet einen das Windrad übergreifenden Käfig und sichert vor möglichen Berührungen, z.B. mit kleineren Flugkörpern.

Im Rahmen der geforderten Versetzbarkeit der Anlage ist vorgesehen, daß das Drucklager des Zentralfundamentes, das Schwenklager des Druckfundamentes sowie das Zuglager auswechselbar oder versetzbar sind, sowie, unter Berücksichtigung der erforderlichen freien Bewegbarkeit der Tragsäule und des Windrades das Drucklager sowie das Schwenklager und das Zuglager in jeweils gleichem Abstand angeordnet vorgesehen und das der Spannscheibe zugeordnete Spannscheibenlager in gleichem, jedoch höhenversetztem Abstand, in Reihe fixierbar sind, wobei bei Verbund dieser Einheiten in 120°-Dreierteilung die Lagerungen bzw. die Zuglagerung, bei Ausbildung als Doppellager, jeweils einmal entfallen kann, und bei Erstellung von jeweils vier Spannebenen, jeweils nur zwei Zuglager, ebenfalls als Doppellager ausgebildet, erforderlich sind.

Zur Einordnung des Antriebsplateaus in die Tragsäule ist zu bemerken, daß diese aus einer relativ dicken Stahlplatte als Dachabdeckung und aus einer Bodenplatte – ebenfalls aus Stahl –, durch die Träger distanzierend verbunden sind, besteht, und hierbei das Tragsäulen-Oberteil und das Tragsäulen-Mittelteil jeweils zu den Ebenen des Antriebsplateaus, d.h. zu deren Dachabdeckung und zu deren Bodenplatte gerichtet, verbunden sind, wobei die beidendig vorgesehenen Knotenbleche die Verbindungen mit dem Dach- und Bodenblech versteifen.

Zur Ausbildung des Windrades wird bemerkt, daß das Windrad aus einer Vielzahl gleichdimensionierter Blätter besteht und entgegen der Hauptwindrichtung in einem Anstellwinkel von etwa 10° nach vorne geneigt aufgebaut ist, wobei ebene Platten-oder Laminarprofile, z.B. das Göttinger Profil 446 oder das gleichgewölbte Göttinger Profil 447, verwendet werden, und daß zur sicheren Distanz der Blätter zueinander eine Verankerung zwischen den Blättern in gleichem Abstand zur Windradnabe vorgesehen ist, wobei zur Stabilisierung der Lage der Nabe des Windrades der einzelnen Windradflügel an der Windradnabe eine an der Nabe und/oder an der verlängernd vorgezogenen Spanntrommel durch Spannschlösser spannbare, zum jeweiligen Flügelende geführte Spannseile vorgesehen sind.

Als Kegelradgetriebe kann ein Ausgleichsgetriebe vorgesehen werden, dessen Antriebswelle und dessen Bremswelle gemeinsam nach oben anstellbar sind, und daß der Bremswelle eine Backen- und/oder Scheibenbremse zugeordnet ist.

Des weiteren ist vorgesehen, daß die Ausrichtbarkeit des Antriebsplateaus zur Windrichtung durch einen einfachen oder in Doppelanordnung ausgebildeten Stellmotor gegeben ist, wobei – normale Windbelastung vorausgesetzt - das Verstellruder senkrecht zur Ebene des Windrades ausgerichtet ist, und daß die normale Ruderstellung solange beibehalten wird, bis die maximale Leistungsaufname des Windrades erreicht ist, und mit Erreichung dieser Grenze das Verstellruder durch einen Regel- und Steuermechanismus die Strömung der Verstellung des Ruders insoweit ablenkt, bis wieder die normale maximale Grenzbelastung gegeben ist, wobei bei einer Doppelausbildung des Verstellruders diese durch eine Parallelogramm-Verbindung gleichzeitig und einheitlich einstellbar sind.

Der Antrieb der Generatoren, deren Lagerung und die Stromabgabe erfolgt dadurch, daß die von dem Getriebe ausgehende, nach unten führende Antriebswelle durch Zwischenlager, die in einer offenen Seite des profilierten Trägers der Tragsäule in dessen Mittelteil angeordnet ist und eine zusätzliche Führung über Halslager in das Generatorengetriebe mit waagrecht sternförmig angeordneten entkuppelbare Zapfwellenabtriebe eingreift, wobei zwischen den Generatoren und den Zapfwellen je eine Kupplung vorgesehen ist, daß der Generatorenstand mit dem Tragsäulen-Mittelteil durch ein geschlossenes tragendes Gehäuse nach unten mit diesem verbunden und begrenzt ist, daß das Tragsäulen-Unterteil dem Generatorenstand mit fester Verbindung anschließt, wobei dieser ein tragendes Gehäuse bildet, und daß der von den Generatoren erzeugte Strom über einen Mehrfachschleifring der Stromsammelleitung zugeführt bzw. in eine solche eingespeist wird.

Durch diese Lösung werden die Ziele der Aufgabenformulierung in vollem Umfang erreicht.

Die Erfindung wird in einer beispielsweisen Ausbildung durch die beigefügten Zeichnungen näher erläutert.

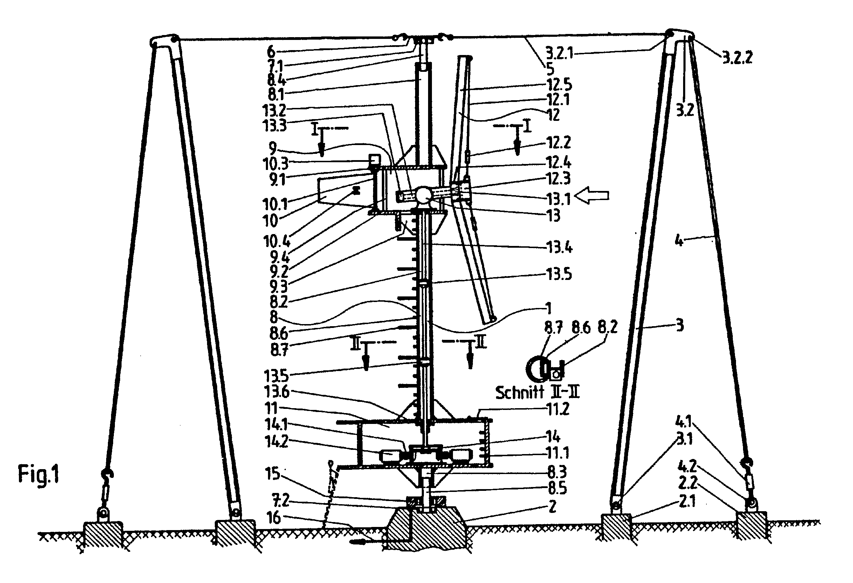

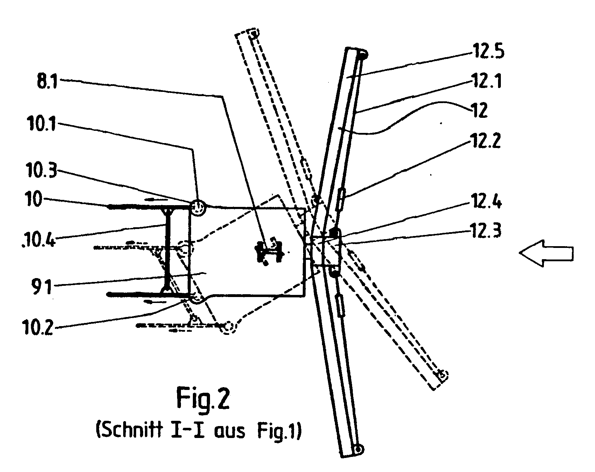

Figur 1 zeigt die Windkraftanlage im Aufriß in einem Schnitt durch die Tragsäule und deren Verankerung mit Einzelfundamenten, einem ergänzenden Teilschnitt II-II durch das Tragsäulen-Mittelteil, die Abtriebswelle und deren Zwischenlagerung, sowie die Lage eines an der Tragsäule angeordneten gesicherten Steigsprossenaufstieges.

Figur 2 zeigt den Schnitt I-I durch Figur 1, d.h. die Draufsicht auf das Antriebsblatt.

Das Zentralfundament 2 der Windkraftanlage 1 über nimmt die Funktion eines Druckfundamentes und nimmt ein Drucklager 7.2 für den unteren Tragzapfen 8.5 der Tragsäule 8 auf, während der obere Tragzapfen 8.4 die Tragsäule 8 nach oben abgrenzt und hierbei in dem oberen Spannscheibenlager 7.1 endet. Dieses ist mit der Spannscheibe 6 lösbar fest verbunden.

Zur Ausbildung der Tragsäule 8 ist festzuhalten, daß diese aus drei Teilabschnitten, d.h. dem Tragsäulen-Oberteil 8.1, dem Tragsäulen-Mittelteil 8.2 und dem Tragsäulen-Unterteil 8.3 besteht.

Die Verbindung zwischen dem Tragsäulen-Oberteil 8.1 und dem Tragsäulen-Mittelteil 8.2 erfolgt über das Antriebsplateau 9 und die des Tragsäulen-Mittelteiles 8.2 mit dem Tragsäulen-Unterteil 8.3 über den Generatorstand 11.

Diese verbindenden Positionen werden später erläutert.

Hierbei sind das Antriebsplateau 9 und der Generatorstand 11 in ihrer Statik so konzipiert, daß diese die jeweiligen Druck- oder auch Seitenkräfte in vollem Umfang über die jeweiligen Tragzapfen 8.4 und 8.5 übernehmen.

Die um das Zentralfundament 2 in gleichem Radius angeordneten Druckfundamente 2.1 sind mit Schwenklager 3.1 ausgebildet, wobei mit diesen die Druckstreben 3 verbunden sind, die ihrerseits in nach außen geneigter Lage in ihrer oberen Endbegrenzung mit den Spannwinkeln 3.2 verbunden sind, die ihrerseits wieder mit je einer inneren, zum Zentralfundament 2 gerichteten Spannöse 3.2.1 und einer äußeren, entgegengesetzt gerichteten Spannöse 3.2.2 ausgebildet sind.

Von der inneren Spannöse 3.2.1 führt jeweils ein waagrechtes Spannseil 5 zur Spannscheibe 6 und von der äußeren Spannöse 3.2.2 ein mit Spannschloß 4.1 ausgerüstetes, etwa unter 15° nach außen gerichtetes Spannseil 4 zu dem mit dem Zugfundament 2.2 verbundenen Zuglager 4.2.

Die Fundamentgruppierungen 2, 2.1 und 2.2, die Druckstreben 3 sowie die Spannseile 4 und 5 zur Spannscheibe und zu den Fundamenten 2.1 müssen zunächst dreifach in 120°-Teilung zur eindeutigen Fixierung der Windkraftanlage 1 vorgesehen werden, wobei selbstverständlich auch engere Teilungen innerhalb der Druck- und Spannebene vorsehbar sind.

Das bereits erwähnte Antriebsplateau 9 besteht aus einer relativ dicken Stahlplatte als Dachabdeckung 9.1 und aus einem Bodenplatte 9.2 – ebenfalls aus Stahl –, die durch Träger 9.4 distanzierend verbunden sind. Hierbei sind das Tragsäulen-Oberteil 8.1 und das Tragsäulen-Mittelteil 8.2 jeweils zu den Ebenen des Antriebsplateaus 9, d.h. deren Dachabdeckung 9.1 und deren Bodenplatte 9.2, senkrecht ausgerichtet, und mit, Knotenblechen versehen, die der käfigartigen, offenen Ausbildung des Antriebsplateaus 9 eine wesentliche Versteifung der Verbindung vermitteln.

Das Bodenplattenteil des Antriebsplateaus 9 ist mit einer Einstiegöffnung 9.3 versehen, die über Steigsprossen 8.6 mit zugeordneten Sicherheitsbügeln 8.7 über die Steigleiter 11.1 und die Dachluke 11.2 erreichbar ist.

Die zweite Unterbrechung der Antriebssäule 8 zwischen dem Tragsäulen-Mittelteil 8.2 und dem Tragsäulen-Unterteil 8.3 erfolgt durch den geschlossenen Generatorstand 11, wobei dieser als tragendes Gehäuse, neben dem Generatorengetriebe 14, mit waagrecht sternförmig angeordneten Abtrieben über Kupplungen 14.1 die Generatoren 14.2 aufnimmt, sowie Halslager 13.6 trägt.

Die Generatoren 14.2 sind dem Generatorgetriebe 14 über waagrecht angeordnete, in der Regel sternförmig verteilte, mit Kupplungen 14.1 versehene Zapfwellen zugeordnet, wobei die maximale Leistungsaufnahme der einzelnen Generatoren 14.2 abgestuft ist.

Die Tragsäule 8 bildet zusammen mit dem Antriebsplateau 9 und dem Generatorenstand 11 eine Einheit, die zwischen dem Spannscheibenlager 7.1 und dem Drucklager 7.2 durch Spannung der Seile 5 über die Seile 4 eine absolut lotrechte Einstellung der Tragsäule 8 und der mit ihr verbundenen Teile 9, 11, 8.4 und 8.5 ermöglicht.

Die Ausrichtung des Antriebsplateaus 9 zur Windrichtung erfolgt durch großdimensionierte Verstellruder 10, die bei der hier vorgesehenen Doppelanordnung durch einen Stellmotor 10.3, eine Antriebswelle 10.1, eine Schwenkwelle 10.2 und über eine Parallelogramm-Verbindung 10.4 der Verstellruder 10 einstellbar sind, wobei- normale Windbelastung vorausgesetzt – die Verstellruder 10 senkrecht zur Ebene des Windrades 12 ausgerichtet sind.

Diese Lage wird so lange beibehalten, bis die maximale Leistungsaufnahme des Windrades 12 erreicht ist, und mit Erreichung dieser Grenze die Ruder 10 durch einen hier nicht näher beschriebenen Regel- und Steuerungsmechanismus die Strömung durch Verstellung der Ruder 10 insoweit ablenken, bis sich wieder die normale, maximale Grenzbelastung einstellt.

Die einfachste Weise zur Regelung dieser Einstellung kann durch einen durch die Leistungsaufnahme gesteuerten Verstellmechanismus, d.h. durch entsprechend der Stromaufnahme gesteuerten Stellmotor 10.3 erfolgen, wobei im Falle dieses Beispieles, die beiden Verstellruder 10 durch die Parallelogrammverbindung 10.4 (Strebe) gleichzeitig und einheitlich einstellbar sind.

Die Ausbildung des Windrades 12, insbesondere die Profilierung der einzelnen Windflächen, ist abschließend noch nicht getestet. Unter anderem ist auch daran gedacht, das Windrad 12 aus einer Vielzahl gleicher Blätter und gleichem Grundriß u.Querschnitt – entgegen der Hauptwindrichtung - in einem Anstellwinkel von etwa 10° nach vorne geneigt, als ebene Platten oder Laminarprofile, z.B. Göttinger Profil 446 oder aus leicht gewölbten Profilen 447 auszubilden, wobei zur sicheren Distanz der Blätter zueinander eine nicht gezeichnete, das Windrad 12 umfassende Verankerung zwischen den Blattspitzen vorgesehen ist.

Um die Befestigung der einzelnen Windradflügel 12.5 an der Windradnabe 12.4 und die Lage zur Windrichtung zu stabilisieren, ist von der Nabe eine verlängernd vorgezogene Spanntrommel 12.3 getragen und es sind durch Spannschlösser 12.2 spannbare, zum jeweiligen Flügelende führende Spannseile 12.1 vorgesehen, so daß auch bei starkem Windaufkommen ein Umschlag der einzelnen Windradflügel 12.5 in Windrichtung vermieden wird.

Bei der vorgesehenen Konzeption ist daran gedacht, als Kegelradgetriebe 13 ein Ausgleichsgetriebe zu verwenden, dessen Antriebswelle 13.1 und dessen Bremswelle 13.2 gemeinsam nach oben bzw. unten aus der Waagrechten ausschwenkbar sind, so daß der sich ausbildende, induzierte Widerstand zu jedem Blatt, d.h. im Sinne der Definition der Karmannschen Wirbelstraße – abgesehen von mit dem Blattradius wachsender Geschwindigkeit der Blattflächen –, nicht über den gesamten Umfang des Windrades in Normalebene (senkrecht) gleichmäßig einstellen kann.

Die Bremswelle 13.2 ist, wie erwähnt, gleichgerichtet mit der Antriebswelle 13.1, wobei beliebige Bremssysteme 13.3, z.B. Backen- oder Scheibenbremsen, vorsehbar sind.

Die Antriebswelle 13.4 ist durch Zwischenlager 13.5, die in einer offenen Seite des Doppel-T-Trägers der Tragsäule 8, d.h. dessen Mittelteil 8.2, angeordnet und erfährt zusätzlich Führung über ein Halslager 13.6 vor dem Eintritt in das Generatoren-Getriebe 14.

Jeder einzelne Generator (14.2) ist abschaltbar, so daß in Verbindung mit den verschieden dimensionierten Generatoren eine Leistungsanpassung in weitem Rahmen üblich ist.

Der erzeugte Strom wird über einen Mehrfachschleifring 15 einer Stromsammelleitung 16 zugeführt bzw. in eine solche eingespeist.

Im weiteren ist noch auf einen besonderen Vorteil dieses Systemes zu verweisen.

Durch geeignete, von der Spannscheibe 6 im Abstand des Windradplatzbedarfes distanzierte, weitere Spannscheiben 6 ist es möglich, mit reduziertem Fundamentierungsaufwand weitere Windkraftanlagen 1 in Reihe anzuordnen, so daß sich die Zahl der notwendigen Druckstreben und Spannseile in der Fundamentierung 2.1 und 2.2/ 2 auf ein Minimun verringern läßt.

## Ansprüche

1. Windkraftanlage (1), bestehend aus jeweils zumindest einer, in der Regel aus mehreren Längenabschnitten (8.1/8.2/8.3) oder weiteren Abschnitten bestehenden Tragsäule (8), die um 360° durchlaufend drehbar ist, wobei zumindest deren Antriebsplateau (9) und deren Generatorenstand (11) zwischen einzelnen Abschnitten der Tragsäule (8) mit diesen tragend und drehfest verbunden sind,

wobei die Tragsäule (8) nach oben durch einen Tragzapfen (8.4) und nach unten durch einen Tragzapfen (8.5) abgegrenzt ist, wobei der obere Tragzapfen (8.4) in einem Spannscheibenlager (7.1), das fest mit der Spannscheibe (6) verbunden und der untere Tragzapfen (8.5) in einem Drucklager (7.2), das in einem Zentralfundament (2) gehalten ist, endet,

wobei, ausgehend von dem Zentralfundanent (2), einem Druckfundament (2.1),einem Zugfundament (2.2), der oberen Spannscheibe (6) in Verbindung mit mindestens zwei weiteren gleichen Bodengruppierungen Spannebenen gleicher Teilung gebildet sind, zwischen denen die Tragsäule (8) eingespannt ist, wobei Druckstreben (3) nach unten jeweils in einem Schwenklager (3.1) und nach oben in einem Spannwinkel (3.2) enden, und die Spannwinkel (3.2) je eine innere, d.h. zur Spannscheibe (6) gerichtete Spannöse (3.2.1) und eine äußere Spannöse (3.2.2) aufweisen, in denen,ausgehend von der Spannscheibe (6) die Seile (5) mit den inneren Spannösen (3.2.1) und ausgehend von der äußeren Spannöse (3.2.2) ein jeweils mit einem Spannschloß (4.1) ausgerüstetes Spannseil (4) in das Zuglager (4.2) führt, und die Seile (5) die Spannscheibe (6) waagrecht und die Tragsäule (8) senkrecht ausrichtbar fixieren,

wobei das Windrad (12) von einem Ruder (10) in seiner Lage zur Windrichtung einstellbar ist und ein Kegelradgetriebe (13) Antreibt,

wobei die von diesem abgehende Antriebswelle (13.4) zum Generatorengetriebe (14) durch Zwischenlager (13.5) gelagert ist, die in einer offenen Seite des Trägerprofils der Tragsäule (8) außerhalb deren Schwerlinie geführt sind, und wobei die Antriebswelle (13.4) vor dem Eintritt in das Generatorengetriebe (14) durch ein Halslager (13.6) zusätzlich geführt ist, und wobei das Generatorengetriebe (14) mit waagrecht abgehenden Zapfwellen für verschieden dimensionierbare, auskuppelbare Generatoren (14.2) ausgerüstet ist.

2. Windkraftänlage nach Anspruch 1, dadurch gekenzeichnet,

daß das Drucklager (7.2) des Zentralfundamentes (2), das Schwenklager (3.1) des Druckfundamentes (2.1) sowie das Zuglager (4.2) auswechselbar oder versetzbar sind.

3. Windkraftanlage nach Anspruch 1 und 2, dadurch gekennzeichnet,

daß unter Berücksichtigung der erforderlichen freien Bewegbarkeit der Tragsäule (8) und des Windrades (12) das Drucklager (7.2) sowie das Schwenklager (3.1) und das Zuglager (4.2) in jeweils gleichem Abstand angeordnet vorgesehen und das der Spannscheibe (6) zugeordnete Spannscheibenlager (7.1) In gleichem, jedoch höhenversetztem Abstand, in Reihe fixierbar sind, wobei bei Verbund dieser Einheiten in 120°-Dreierteilung die Lagerungen (3.1 und 4.2) bzw. die Zuglagerung (4.2), bei Ausbildung als Doppellager, jeweils einmal entfallen kann, und bei Erstellung von jeweils vier Spannebenen, jeweils nur zwei Zuglager (4.2), ebenfalls als Doppellager ausgebildet, erforderlich sind.

4. Windkraftanlage nach Anspruch 1, dadurch gekennzeichnet,

daß das Antriebsplateau (9) aus einer relativ dicken Stahlplatte als Dachabdeckung (9.1) und aus einer Bodenplatte (9.2) – ebenfalls aus Stahl –, die durch Träger (9.4) distanzierend verbunden sind, besteht, und hierbei das Tragsäulen Oberteil (8.1) und das Tragsäulen-Mittelteil (8.2) jeweils zu den Ebenen des Antriebsplateaus (9), d.h. zu deren Dachabdeckung (9.1) und zu deren Bodenplatte (9.2) senkrecht gerichtet, und mit ihnen verbunden sind, wobei die beidendig vorgesehenen Knotenbleche die Verbindungen mit dem Dach- und Bodenblech (9.1/9.2) versteifen.

5. Windkraftanlage nach Anspruch 1 und 3, dadurch gekennzeichnet,

daß das Windrad (12) aus einer Vielzahl gleichdimensionierter Blätter (12.5) besteht und entgegen der Hauptwindrichtung in einem Anstellwinkel von etwa 10° nach vorne geneigt aufgebaut ist, wobei ebene Platten- oder Laminarprofile, z.B. das Göttinger Profil 446 oder das gleichgewölbte Göttinger Profil 447, verwendet werden, und

daß zur sicheren Distanz der Blätter zueinander eine Verankerung zwischen den Blättern (12.5) in gleichem Abstand zur Windradnabe (12.4) vorgesehen ist.

6. Windkraftanlage nach Anspruch 1 und 3, dadurch gekennzeichnet,

daß zur Stabilisierung der Lage (12) der einzelnen Windradflügel (12.5) an der Windradnabe (12.4) eine an der Nabe und/oder an der verlängernd vorgezogenen Spanntrommel (12.3) durch Spannschlösser (12.2) spannbare, zum jeweiligen Flügelende (12.5) geführte Spannseile (12.1) vorgesehen sind.

7. Windkraftanlage nach Anspruch 1, dadurch gekennzeichnet,

daß als Kegelradgetriebe (13) ein Ausgleichsgetriebe vorgesehen ist, dessen Antriebswelle (13.1) und dessen Bremswelle (13.2) gemeinsam aus der Horizontalen ausschwenkbar sind, und

daß der Bremswelle (13.2) eine Backen- und-/oder Scheibenbremse (13.3) zugordnet ist.

8. Windkraftanlage nach Anspruch 1 und 4, dadurch gekennzeichnet,

daß die Ausrichtbarkeit des Antriebsplateaus (9) zur Windrichtung durch einen einfachen oder in Doppelanordnung ausgebildeten Stellmotor (10.3) gegeben ist, wobei – normale Windbelastung vorausgesetzt – das Verstellruder (10) senkrecht zur Ebene des Windrades (12) ausgerichtet ist, und

daß die normale Ruderstellung solange beibehalten wird, bis die maximale Leistungsaufnahme des Windrades (12) erreicht ist, und mit Erreichung dieser Grenze das Verstellruder (10) durch einen Regel- und Steuermechanismus die Strömung der Verstellung des Ruders insoweit ablenkt, bis wieder die normale maximale Grenzbelastung gegeben ist.

9. Windkraftanlage nach Anspruch 1 und 3, dadurch gekennzeichnet,

daß bei einer Doppelausbildung des Verstellruders (10) diese durch eine Parallelogramm-Verbindung (10.4) gleichzeitig und einheitlich einstellbar sind.

10. Windkraftanlage nach Anspruch 1, dadurch gekennzeichnet,

daß die von dem Getriebe (13) ausgehende, nach unten führende Antriebswelle (13.4) durch Zwischenlager (13.5), die in einer offenen Seite des profilierten Trägers der Tragsäule (8) in dessen Mittelteil angeordnet ist und eine zusätzliche Führung über Halslager (13.6) in das Generatorengetriebe (14) mit waagrecht sternförmig angeordneten entkuppelbare Zapfwellenabtriebe eingreift, wobei zwischen den Generatoren (14.2) und den Zapfwellen je eine Kupplung (14.1) vorgesehen ist,

daß der Generatorenstand (11) mit dem Tragsäulen-Mittelteil (8.2) durch ein geschlossenenes, tragendes Gehäuse nach unten mit diesem verbunden und begrenzt ist,

daß das Tragsäulen-Unterteil (8.3) dem Generatorenstand (11) mit fester Verbindung anschließt, wobei dieser ein tragendes Gehäuse bildet, und

daß der von den Generatoren (14.2) erzeugte Strom über einen Mehrfachschleifring (15) der Stromsammelleitung (16) zugeführt bzw. in eine solche eingespeist wird.

**Claims**

1. A wind motor (1) comprising a support column (8) respectively consisting of at least one, usually a plural number of, longitudinal sections (8.1/8.2/ 8.3) or further sections, with the support column (8) being continuously pivotable about 360°, with at least the drive platform (9) and the generator stand (11) thereof, between individual sections of the support column (8), being connected therewith in supporting and non-rotating manner,

with the support column (8) being confined upwardly by a support pin (8.4) and downwardly by a support pin (8.5), with the upper support pin (8.4) terminating in a clamping plate bearing (7.1) rigidly connected to the clamping plate (6), and the lower support pin(8.5) terminating in a thrust bearing (7.2) held in a central foundation (2),

wherein, starting from the central foundation (2), a thrust foundation (2.1), a traction foundation (2.2), the upper clamping plate (6) in conjunction with at least two other identical bottom groupings, clamping planes of identical division are formed between which the support column (8) is clamped, with thrust braces (3) respectively terminating downwardly in a swivel bearing (3.1) and upwardly in a clamping angle (3.2), and wherein the clamping angles (3.2) each have one internal clamping ear (3.2.1) directed toward the clamping plate (6), and an outer clamping ear (3.2.2) in which, starting from the clamping plate (6), cables (5) with the internal clamping ears (3.2.1), and a clamping cable (4), starting from the outer clamping ears (3.2.2), respectively equipped with a clamping lock (4.1), lead to the thrust bearing (4.2), with the cables (5) fixing the clamping plate (6) in a direction horizontally aligned, and the support column (8) in a direction vertically aligned, with the wind wheel (12) being adjustable by a rudder (10) relative to the wind direction to actuate a bevel-wheel gear (13), with the driving shaft (13.4) emerging therefrom being disposed relative to the generator gear (14) through intermediate bearings (13.5) guided in an open side of the carrier profile of the support column (8) externally of the line of gravity, with the driving shaft (13.4) prior to entering the generator gear (14) being additionally guided by a journal bearing (13.6), and with the generator gear (14) being furnished with horizontally branching p.t.o. shafts for disconnectable generators (14.2) of varying sizes.

2. A wind motor according to claim 1, characterized in

that the the thrust bearing (7.2) of the central foundation (12), the pivot bearing (3.1) of the thrust foundation (2.1) and the traction bearing (4.2) are replaceable or resettable.

3. A wind motor according to claims 1 and 2, characterized in

that under consideration of the required free movability of the support column (8) and of the wind wheel (2), the thrust bearing (7.2) and the swivel bearing (3.1) as well as the traction bearing (4.2) are respectively disposed equidistantly and the clamping plate bearing (7.1) associated to the clamping plate (6) is series-fixed at the same yet vertically staggered space, wherein bearings (3.1 and 4.2) or the traction bearing (4.2), respectively,

– with the afore-going units combined in a tri-division of 120° – can be respectively eliminated if formed as double-bearings, and, when forming respectively four clamping planes, respectively only two traction bearings (4.2) equally formed as a double bearing will be needed.

4. A wind motor according to claim 1, characterized in

that the driving platform (9) consists of a relatively thick steel plate forming a roof cover (9.1) and of a bottom plate (9.2) equally made of steel, which through carriers (9.4) are connected in spaced relationship, with the support column upper portion (8.1) and the support column central portion (8.2) being respectively vertically directed relative to to the planes of the driving platform (9), i.e. relative to the roof cover (9.1) and the bottom plate (9.2) thereof and being connected thereto, with the gusset plates provided on either end reinforcing the connections to the roof and bottom plates (9.1/9.2)

5. A wind motor according to claims 1 and 3, characterized in

that the wind wheel (12) consists of a plurality of equi-dimensioned vanes (12.5) and is mounted against the main wind direction at an angle of attack of about 10°, in a manner forwardly inclined, with planar plate or laminar profiles, e.g. Göttingen profile 446 or the equi-curved Göttingen profile 447, being employed, and

that for insuring a safe distance of the vanes between one another, an anchoring is provided between the vanes (12.5) at an equal distance from the wind wheel hub (12.4).

6. A wind motor according to claims 1 and 3, characterized in

that, for stabilizing the position of the individual wind wheel vanes (12.5) on the wind wheel hub (12.4), clamping cables (12.1) clampable by clamping locks (12.2) and leading to the respective vane end (12.5) are provided on the hub and/or on the clamping drum (12.3) drawn forwardly to form an extension.

7. A wind motor according to claim 1, characterized in

that a compensation gear is provided forming a bevel wheel gear (13), the driving shaft (13.1) of which and the brake shaft (13.2) of which swing out commonly from the horizontal,

that a yaw and/or disc brake is associated to the brake shaft (13.2).

8. A wind motor according to claims 1 and 4,

characterized in

that the aligning capability of the driving platform (9) with the wind direction is insured by a single or dual-configured servomotor (10.3) wherein, with the wind load being normal, the adjusting rudder (10) is in vertical alignment with the plane of the wind wheel (12), and

that the normal rudder position is maintained until the maximum capacity of the wind wheel (12) is reached and, once such limit is reached, the adjusting rudder (10), through a regulating and control mechanism, deviates the flow of the rudder adjustment until the maximum limit load is restored.

9. A wind motor according to claims 1 and 3, characterized in

that with a dual configuration of the adjusting rudder (10), simultaneous and uniform adjustment is insured by a parallelogram-connection (10.4).

10. A wind motor according to claim 1, characterized in

that the driving shaft (13.4) emerging from the gear (13) and leading downwardly, through intermediate bearings (13.5) guided in an open side of the profiled carrier of the support column (8), is disposed in the central portion thereof, and an additional guide, through journal bearings (13.6), engages the generator gear (14) with disconnectable p.t.o. shaft drives disposed in a manner horizontally radial, with one coupling (14.1) each being provided between the generators (14.2) and the p.t.o. shafts,

that the generator stand (11) with the support column central portion (8.2), through a closed supporting housing, is downwardly connected thereto and confined thereby,

that the support column bottom portion (8.3) follows the generator stand (11) with a firm connection, with the latter forming a supporting housing, and

that the power generated by the generators (14.2), via a multiple contact ring (15),is supplied to the current collecting line (16) or is fed thereto, respectively.

## Revendications

1. Eolienne (1), composée individuellement d'au moins une et en règle générale de plusieurs colonnes-supports (8), composées de plusieurs sections longitudinales (8.1/8.2/8.3) ou d'autres sections, susceptibles de tourner sans entrave sur la totalité des 360°, où au moins sa plateforme d'entraînement (9) et son support de générateur (11) étant reliés, entre des sections différentes de la colonne-support (8), en contribuant à supporter ces sections et en leur étant fixé en rotation, la colonne-support (8) étant délimitée en partie supérieure par un tourillon support (8.4) et en partie inférieure par un tourillon-support (8.5), le tourillon support supérieur (8.4) s'achevant en un palier à disque de tension (7.1), fermement relié au disque de tension (6) et le tourillon support inférieur (8.5) s'achevant en un palier de butée (7.2) maintenu dans une fondation centrale (2), où sont disposés en liaison, en partant de la fondation centrale (2), d'une fondation de compression (2.1), d'une fondation de traction (2.2), du disque de tension supérieur (6), au moins deux autres groupes au sol identiques formés de plans de fixation placés suivant la même répartition, entre lesquels la colonne support (8) est fixée, où des jambes de compression (3) s'achèvent chacune vers le bas en un palier pivotant (3.1) et vers le haut en une cornière de tension (3.2), et les cornières-tendeurs présentent chacune un oeillet de tension intérieur (3.2.1), c'est-à-dire orienté vers le disque de tension (6), et un oeillet de serrage extérieur (3.2.2), dans lesquels, en partant du disque de tension (6), les câbles (5) sont fixés avec les oeillets de tension intérieurs (3-2.1) et, en partant de l'oeillet de tension extérieur (3.2.2), un câble de tension (4), chaque fois équipé d'un ridoir (4.1) va au palier de traction (4.2), et les câbles (5) fixant selon une orientation déterminée d'une part le disque de tension (6) en position horizontale et d'autre part la colonne-support (8) en position verticale, la position du rotor d'éolienne (12) par rapport à la direction du vent étant réglable grâce à un empennage (10), l'entraînement du mouvement s'effectuant sur une transmission à roues coniques (13), dont l'arbre d'entrainement (13.4) qui en sort étant porté, lors de son passage vers la transmission du générateur (14), au moyen de paliers intermédiaires (13.4), guidés sur un côté ouvert du profilé support de la colonne-support (8) qui est décalé par rapport à l'axe passant par le centre de gravité, l'arbre d'entraînement (13.4) passant de plus, avent l'entrée dans la transmission de générateur (14), au travers d'un palier à collet (13.6), et la transmission de générateur (14) étant équipée de bouts d'arbres sortant horizontalement, pour des générateurs désolidarisables (14.2), de caractéristiques différentes.

2. Eolienne selon la revendication 1, caractérisée en ce que le palier de pression (7.2) de la fondation centrale (2), le palier pivotant (3.1) de la fondation de compression (2.1), ainsi que le palier de traction (4.2) sont interchangeables ou permutables.

3. Eolienne selon les revendications 1 et 2, caractérisée en ce qu'en prenant en considération la libre mobilité nécessaire à la colonne-support (8) et au rotor d'éolienne (12), le palier de pression (7.2) ainsi que le palier pivotant (3.1) et le palier de traction (4.2) sont prévus chaque fois suivant un espacement identique, et le palier de disque de tension (7.1) associé au disque de tension (6) est susceptible d'être fixés en alignement, suivant un espacement identique mais en étant cependant décalé en hauteur, où, dans le cas de liaison de ces ensembles, suivant une division de trois fois 120°, un exemplaire des paliers (3.1 et 4.2), respectivement le palier de traction (4.2) en cas de réalisation en palier double, peut être supprimé, et où, en cas d'installation de chaque fois quatre plans de tension, seuls sont nécessaires deux paliers de traction (4.2), également réalisés sous forme de paliers doubles.

4. Eolienne selon la revendication 1, caractérisée en ce que la plateforme d'entraînement (9) se compose d'une plaque d'acier relativement épaisse servant, de recouvrement de toiture (9.1) et d'une plaque de sol (9.2), également en acier, reliées à distance grâce à des supports (9.4), la partie supérieure de colonne support (8.1) et la partie médiane de colonne-support (8.2) étant en même temps respectivement orientées perpendiculairement par rapport au plan de la plateforme d'entraînement (9), c'est-à-dire par rapport à son recouvrement de toiture (9.1) et à sa plaque de sol (9.2), et leur étant reliées, les tôles d'éclissage prévues aux deux extrémités rigidifiant les liaisons avec la tôle de toiture et la tôle de sol (9.1/9.2).

5. Eolienne selon les revendications 1 et 3, caractérisée en ce que le rotor d'éolienne (12) se compose d'une pluralité de pales (12.5) de dimensions identiques et est monté incliné suivant un angle d'à peu près 10° vers l'avant par rapport à la direction principale du vent, des profilés plans à plaques ou laminaires étant utilisés, par exemple le profil Göttinger 446 ou le profil Göttinger 447 à courbure constante, et en ce qu'un ancrage entre les pales (12.5) étant prévu, suivant un espacement identique par rapport au moyeu de rotor d'éolienne (12.4), en vue d'assurer l'espacement mutuel des pales.

6. Eolienne selon les revendications 1 et 3, caractérisée en ce qu'un tambour de haubanage (12.3) est prévu sur le moyeu et/ou de préférence dans son prolongement, en vue de la stabilisation de la position des différentes pales (12.5) du rotor d'éolienne sur le moyeu de rotor (12.4), des câbles de tension (12.1), allant aux extrémités de pale (12.5) respectives, étant prévus et pouvant être tendus grâce à des ridoirs (12.2).

7. Eolienne selon la revendication 1, caractérisée en ce que la transmission à roues coniques (13) prévue est une transmission à différentiel, dont l'arbre d'entraînement (13.1) et l'arbre de frein (13.2) sont communs et susceptibles de pivoter par rapport à l'horizontale, et en ce qu'un frein à mâchoires et/ou à disques (13.3) est associé à l'arbre de frein (13.2).

8. Eolienne selon les revendications 1 et 4, caractérisée en ce que la possibilité d'orientation est fournie grâce à un servo-moteur (10.3) simple ou double, l'empennage de réglage (10) étant orienté perpendiculairement au plan du rotor d'éolienne (12) dans le cas d'une sollicitation au vent normale, et en ce que la position normale de l'empennage est conservée jusqu'à ce qu'on ait atteint la puissance fournie maximale du rotor de l'éolienne (12), l'aérodynamisme du réglage de l'empennage de réglage (10) étant modifié, grâce à un mécanisme de réglage et de commande, lorsque cette limite est atteinte, jusqu'à ce que l'on soit redescendu à la sollicitation limite maximale normale.

9. Eolienne selon les revendications 1 et 3, caractérisée en ce que dans le cas d'un empennage de réglage double (10), ceux-ci sont réglables simultanément, et individuellement grâce à une liaison à parallélogramme (10.4).

10. Eolienne selon la revendication 1, caractérisée en ce que l'arbre d'entraînement (13.4), qui sort de la transmission (13) et va vers le bas en passant par des paliers intermédiaires (13.5), disposés dans un côté ouvert du support profilé de la colonne-support (8), dans sa partie centrale, et qui passe dans un guidage supplémentaire formé par l'intermédiaire d'un palier à collet (13.6), s'engage dans la transmission de générateur (14), qui comporte des bouts d'arbres de sortie désolidarisables, disposés horizontalement en forme d'étoile, un accouplement (14.1) étant chaque fois prévu entre les générateurs (14.2) et le bout d'arbre, en ce que le bâti de générateur (11) est relié au bas de la partie médiane de colonne-support (8.2), grâce à un carter support qui assure sa délimitation, en ce que la partie inférieure de colonne-support (8.2) se raccorde, grâce à une liaison rigide, au bâti de générateur (11), ce dernier formant un carter support, en ce que le courant électrique produit par les générateurs (14.2) est amené, respectivement injecté à la ligne collectrice électrique (16), par l'intermédiaire d'une bague collectrice à plusieurs balais (15).

Fig.1

Fig.2
(Schnitt I-I aus Fig.1)